(19) Europäisches Patentamt
European Patent Office
Office européen des brevets

(11) Veröffentlichungsnummer: **0 035 966**
**A2**

(12) # EUROPÄISCHE PATENTANMELDUNG

(21) Anmeldenummer: **81810066.1**

(22) Anmeldetag: **27.02.81**

(51) Int. Cl.³: **G 03 C 1/485**
C 09 B 23/06

(30) Priorität: **05.03.80 CH 1740/80**

(43) Veröffentlichungstag der Anmeldung:
**16.09.81 Patentblatt 81/37**

(84) Benannte Vertragsstaaten:
**BE CH DE FR GB IT LI**

(71) Anmelder: **CIBA-GEIGY AG**
**Patentabteilung Postfach**
**CH-4002 Basel(CH)**

(72) Erfinder: **Steiger, Rolf, Dr.**
**Russille**
**CH-1724 Praroman(CH)**

(72) Erfinder: **Reber, Jean-Francois, Dr.**
**Impasse de la Colline 2**
**CH-1723 Marly(CH)**

(54) **Neue Charge-Transfer-Komplexe von Cyaninfarbstoffen, deren Verwendung zur Herstellung von direktpositiven photographischen Materialien, das direktpositive Material, sowie die unter Verwendung dieses Materials hergestellten Bilder.**

(57) Charge-Transfer-Komplexe aus 5 Molekülen eines stark basischen zweikernigen Cyaninfarbstoffs und einem Molekül Chloranil oder Bromanil können an Silberhalogenid-Kristalle adsorbiert werden, die dann zur Herstellung direktpositiver photographischer Materialien verwendet werden können.

EP 0 035 966 A2

CIBA-GEIGY AG
Basel (Schweiz)

68-12738/+

Neue Charge-Transfer-Komplexe von Cyaninfarbstoffen, deren Verwendung zur Herstellung von direktpositiven photographischen Materialien, das direktpositive Material, sowie die unter Verwendung dieses Materials hergestellten Bilder.

Charge-Transfer-Komplexe von Cyaninen als Elektronendonoren mit verschiedenen Elektronen-Akzeptoren sind aus der Literatur bekannt. Sie besitzen besonderes Interesse im Zusammenhang mit der Suche nach organischen Verbindungen mit hoher elektrischer Leitfähigkeit und gegebenenfalls Supraleitfähigkeit. Als Elektronenakzeptoren wurden z.B. Tetracyanochinodimethan [J.H. Lupinski et al., Molecular Crystals 3, 241 (1967); B.H. Klanderman & D.C. Hoesterey, J. Chem. Phys. 51, 377 (1969); J.H. Perlstein, Ang. Ch. 89, 534 (1977)], Chinone [J.E. Lu Valle et al., J. Phys. Chem. 67, 2635 (1963), sowie J. Nys & W. Van den Heuvel, Phot. Korr. 102 (3), 37 (1966)] ferner Jod, verschiedene Anhydride und Trinitroresorcin (J.E. Lu Valle, loc. cit.) vorgeschlagen. Leitfähigkeit, ESR- und optische Spektren in den Bereichen von UV bis IR sind in der genannten Literatur beschrieben worden. 1:1-Komplexe von Benzthiazol- und Benzimidazol-Carbocyaninen mit Chloranil oder Benzochinon als Elektronenakzeptoren wurden von J. Nys und W. Van den Heuvel (loc. cit.) zur Bestimmung der Ionisationspotentiale der entsprechenden Cyanine verwendet. Man vermutet auf Grund des beim Zerfall von 1:1-Komplexen des Chloranils auftretenden Spektren die Existenz von Charge-Transfer-Komplexen mit Cyanin-Aggregaten ähnlich den J-Aggregaten,was jedoch nicht näher untersucht wurde. Auch wurden die vermuteten Komplexe weder isoliert noch rein dargestellt.

Aufgabe der vorliegenden Erfindung ist es, neue Charge-Transfer-Komplexe von Cyaninfarbstoffen mit Elektronenakzeptoren bereitzustellen, die z.B. in der Photographie zur Herstellung direktpositiver

Materialien verwendet werden können.

Es wurde nun gefunden, dass stark basische zweikernige Cyanine mit Chlor- oder Bromanil definierte Komplexe bilden können, die diese interessanten Eigenschaften besitzen und in der Photographie verwendet werden können.

Gegenstand der vorliegenden Erfindung sind daher neue Charge-Transfer-Komplexe aus 5 Molekülen eines stark basischen zweikernigen Cyaninfarbstoffes und einem Molekül Chlor- oder Bromanil.

Weitere Gegenstände der vorliegenden Erfindung sind ein Verfahren zur Herstellung der Charge-Transfer-Komplexe, ihre Verwendung zur Herstellung von direktpositiven photographischen Materialien sowie das erhaltene direktpositive photographische Material und die unter Verwendung dieses Materials hergestellten Bilder.
Zur Herstellung der erfindungsgemässen Komplexe eignen sich insbesondere solche stark basischen zweikernigen Cyanine, deren heterocyclischen Reste sich von Benzimidazol oder am Benzolring halogenierten, insbesondere chlorierten Benzimidazolen ableiten. Die Benzimidazole können mit einem oder mehreren Halogenatomen, z.B. ein oder zwei Chloratomen, substituiert sein.
Die Stickstoffatome der zweikernigen Cyanine können beliebig substituiert sein, wobei jedoch vorzugsweise ein Stickstoffatom der beiden Benzimidazolreste mit Alkyl mit 1 bis 5 Kohlenstoffatomen, und das andere Stickstoffatom mit Alkyl oder Alkoxyalkyl mit je 1 bzw. 2 bis 30, vorzugsweise 1 bzw. 2 bis 18 Kohlenstoffatomen oder einer der Gruppen $-(CH_2)_nX^{\ominus}$ und $-(CH_2)_n-O-CO-R$ substituiert ist, worin $X^{\ominus}$ $-SO_3^{\ominus}$ oder $-COO^{\ominus}$, R Alkyl mit 1 bis 5 Kohlenstoffatomen und n eine ganze Zahl von 1 bis 5 bedeuten.

Insbesondere sind die Cyanine der Formeln

(1) 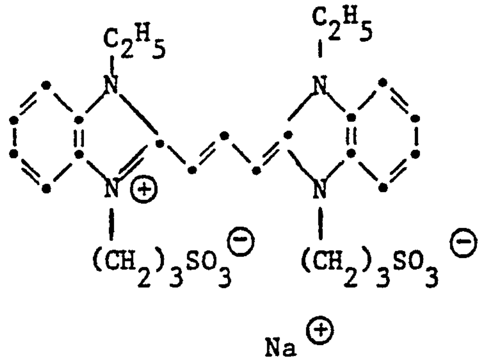 ,

(2) 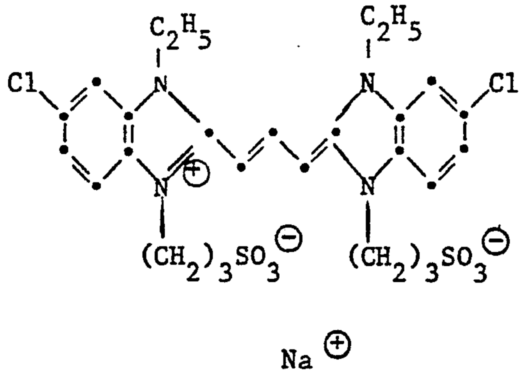 ,

(3) 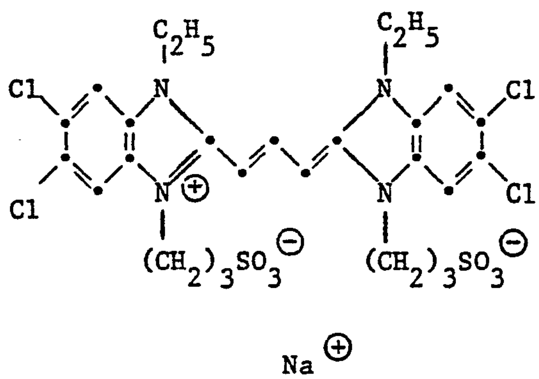 ,

(4) 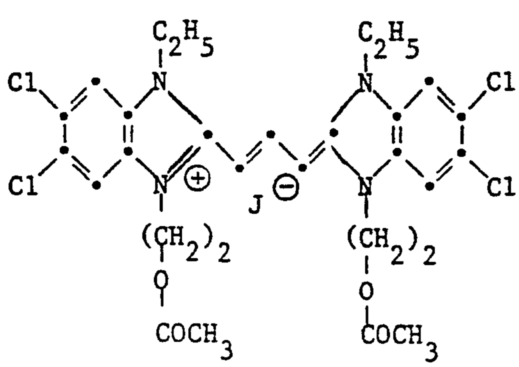 ,

(5) 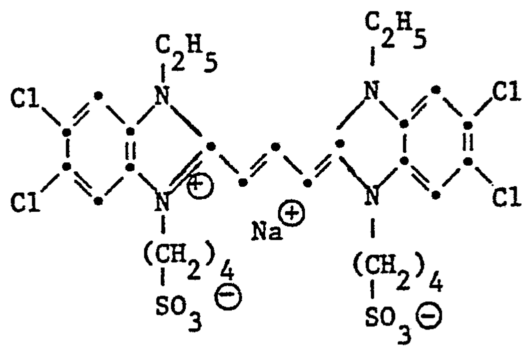 ,

und

(6) 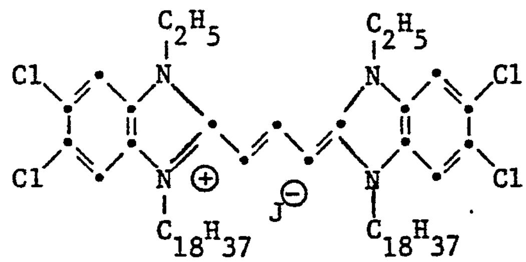

geeignet.

Zur Herstellung der Komplexe werden die Cyanine in einem Gemisch von Chloroform und Methanol gelöst und mit einem Ueberschuss von Chlor- oder Bromanil während mehrerer Stunden am Rückfluss gekocht, wobei die Farbe der Lösung allmählich nach Blau umschlägt. Der in feiner Suspension vorliegende unlösliche Komplex wird abgetrennt, indem man die Suspension in ein Gemisch von Wasser und Chloroform einträgt. Das nicht umgesetzte Cyanin löst sich dabei in der wässerig-methanolischen Schicht und das Chlor- oder Bromanil im Chloroform, während der unlösliche Komplex sich in der Grenzschicht ansammelt. Man reinigt durch mehrmaliges Nachwaschen mit Chloroform und nachträgliches Umkristallisieren aus Dimethylsulfoxid oder Trifluoräthanol. Dünnschichtchromatographie und Elementaranalyse beweisen die Reinheit der Komplexe.

Die erfindungsgemässen Komplexe sind blaue, kristalline Substanzen, die erst oberhalb 300° C unter Zersetzung schmelzen. Sie sind in fester Form monatelang beständig. Ihre Lösungen in Dimethylsulfoxid oder Trifluoräthanol sind mindestens während einiger Tage stabil. In alkalisch-wässerigen Lösungen von Trifluoräthanol tritt rasche Verseifung ein. Die in der Tabelle 1 aufgeführten Komplexe weisen eine breite Absorptionsbande auf mit einem Absorptionsmaximum ($\lambda_{max}$) in der Nähe von 600 nm. Eine breite IR-Bande zeigt sich in der Nähe von 1640 $cm^{-1}$.

Im polykristallinen Zustand zeigen die Komplexe ein kollektives Spin -Phänomen, d.h. eine Parallelausrichtung der Spins benachbarter Moleküle, entsprechend einem typisch ferromagnetischen Verhalten. Magnetische Messungen an der Substanz (C) der Tabelle 1 ergaben eine Ausdehnung der magnetischen Bereiche über mehr als 40 Moleküle.

Gegenüber den einfachen, unkomplexierten Cyaninen besitzen die Komplexe eine wesentliche erhöhte Lichtbeständigkeit. Beobachtet wird eine bis zu 50-fach verbesserte Stabilität.

Die Komplexe sind bemerkenswert beständig gegenüber Protonierung und bilden deshalb selbst in konzentrierter Schwefelsäure beständige Lösungen, deren Absorptionsspektrum im sichtbaren Bereich gegenüber einer Lösung in Methylalkohol, kaum verändert ist.

Photographisch interessant ist das Adsorptionsverhalten der erfindungsgemässen Komplexe an Einkristallen, aufgedampften Schichten und Mikrokristallsuspensionen von Silberhalogeniden in Gelatine. Die zur Komplexbildung benützten Verbindungen Chloranil und Bromanil sind starke Elektronenakzeptoren und besitzen deshalb potentielles Interesse für die Herstellung direktpositiver photographischer Materialien. Bisher gelang es jedoch nicht, diese Substanzen an der negativ geladenen Oberfläche von Silberhalogenidkristallen

zu adsorbieren. Durch Komplexierung mit Cyaninen mit positiver Ladung, z.B. mit dem Komplex aus der Verbindung der Formel (4) und Chloranil gelingt es, den Elektronenakzeptor an einer Silberhalogenidoberfläche zu adsorbieren, und damit deren Eigenschaften als Elektronenakzeptoren photographisch nutzbar zu machen.

Herstellungsbeispiel

500 mg (0,66 mMol) des Cyaninfarbstoffs der Formel (5), welcher zuvor auf chromatographischem Weg gereinigt wurde, werden in 200 ml eines Gemisches von 1 Volumenteil Methanol und 1 Volumenteil Chloroform teils gelöst, teils suspendiert. Nach Zufügen von 300 mg gereinigtem Bromanil wird die Lösung am Rückfluss erhitzt. Die anfänglich braunrote Farbe verschwindet nach etwa 1 Stunde und schlägt allmählich nach Blau um. Es werden weitere 300 mg Bromanil zugefügt und das Kochen am Rückfluss während weiterer drei Stunden fortgesetzt. Danach werden noch einmal 900 mg Bromanil zugefügt, und die Lösung, welche immer noch Teile von ungelöstem Cyaninfarbstoff enthält, für weitere 15 Stunden am Rückfluss gekocht.

Nach Abkühlung auf Raumtemperatur wird das Reaktionsgemisch in einen Scheidetrichter gegossen, in welchem zuvor 200 ml Chloroform und 400 ml Wasser vorgelegt worden waren. Der Charge-Transfer-Komplex (C), (s.Tabelle 1), welcher in Chloroform und Wasser wenig löslich ist,sammelt sich in suspendierter Form an der Grenzfläche von Chloroform und Wasser. Das Chloroform wird danach so vollständig wie möglich abgetrennt, wobei jedoch die Grenzschicht im Scheidetrichter belassen wird. Auf die gleiche Weise wird noch 4 mal mit frischem Chloroform nachgewaschen, womit das überschüssige Bromanil praktisch vollständig entfernt wird. Das in der Grenzschicht suspendierte Endprodukt wird abfiltriert. Man erhält den Komplex (C) in einer Ausbeute von 54 %. Durch Umkristallisieren aus Dimethylsulfoxid oder Trifluoroäthanol bei Raumtemperatur wird der Komplex (C) gereinigt. Die Reinheit wird durch Dünnschichtchromatographie und Elementaranalyse

nachgeprüft.

Analog werden die Komplexe A, B und D der nachfolgenden Tabelle 1 hergestellt.

Tabelle 1

Charge-Transfer-Komplexe von Cyaninen mit Chloranil und Bromanil

| Nr. | Donor (5 Moleküle) Verbindung der Formel | Ladung | Elektronen-akzeptor (1 Molekül) | $\lambda_{max}(CH_3OH)$ |
|---|---|---|---|---|
| A | (3) | ⊖ | 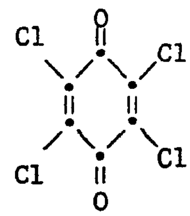 | 603 nm |
| B | (4) | ⊕ | 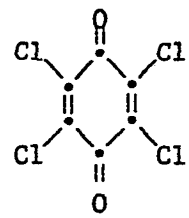 | 600 nm |
| C | (5) | ⊖ | 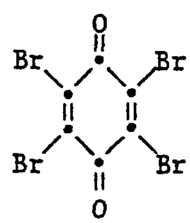 | 604 nm |
| D | (6) | ⊕ | 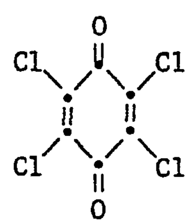 | 600 nm |
| E | (1) | ⊖ | 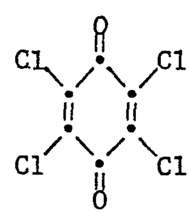 | 580 ± 10 nm |
| F | (2) | ⊖ | 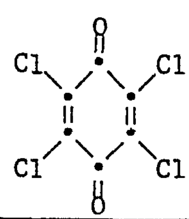 | 592 nm |

Anwendungsbeispiel

Zur Herstellung einer direktpositiven Emulsion, deren Wirkungsweise auf dem Prinzip der Bleichung eines Oberflächenschleiers beruht, wird eine kubisch-monodisperse Silberjodidbromid-Emulsion in Gelatine mit einem Jodidgehalt von 1,6 Mol-% und einer mittleren Kantenlänge der würfelförmigen Kristalle von 0,21 µm bei einer Temperatur von 60° C während 2 Stunden einer chemischen Verschleierung aussetzt. Als Verschleierungsmittel verwendet man pro Mol in der Emulsion vorhandenen Silberhalogenids 7 ml einer 0,01 %igen Lösung von Natrium-Formaldehydsulfoxylat und 17 ml einer 0,01 %igen Lösung von Tetrachlorgold-Säure ($HAuCl_4$). Während der Verschleierung wird ein pH-Wert von 8,8 und ein pAg-Wert von 6,1 eingehalten. Anschliessend wird die Emulsion mit einer wässrigen Lösung des Komplexes (B) behandelt, wobei auf 1 Mol Silberhalogenid der Emulsion 800 mg des Komplexes verwendet werden. Anschliessend wird die Emulsion bei einem pH-Wert von 6,0 und einem pAg-Wert von 9,3 auf einer Polyesterunterlage zu einem dünnen gleichmässigen Film vergossen. Die Schichtdicke wird so bemessen, dass ein Quadratmeter der Schicht 2,7 g Silber und 3,8 g Gelatine enthalten.

Eine Probe der Schicht wird in einem Sensitometer mit gewöhnlichen Wolfram-Glühlicht hinter einem Stufenkeil belichtet und mit einem Entwickler der folgenden Zusammensetzung entwickelt:

| | |
|---|---|
| N-Methyl-p-aminophenolsulfat | 2,0 g |
| Natriumsulfit, wasserfrei | 75,0 g |
| Hydrochinon | 8,0 g |
| Natriumcarbonat, wasserfrei | 37,5 g |
| Kaliumbromid | 2,0 g |
| Wasser ad | 3 Liter |

Die Anwendung des belichteten und entwickelten Stufenkeils ergibt folgende sensitometrischen Werte:

| | |
|---|---|
| Empfindlichkeit $S_{1/2}$ * | 0,85 |
| Kontrast | 0,3 |
| $D_{max}$ | 0,29 |
| $D_{min}$ | 0,04 |

Analoge Ergebnisse erhält man bei Verwendung der Komplexe (A) oder (C) bis (F).

Ersetzt man in der oben beschriebenen Emulsion den Komplex (B) durch äquivalente Mengen des Cyanins der Formel (4) oder durch Chloranil, so erhält man kein direktpositives Bild.

*) In Lux. Sekunden bei $(D_{max} - D_{min}) / 2$

$S_{1/2}$ = 3-logE (E gemessen in Lux. sec.)

Patentansprüche

1. Charge-Transfer-Komplexe aus 5 Molekülen eines stark basischen zweikernigen Cyaninfarbstoffs und einem Molekül Chloranil oder Bromanil.

2. Charge-Transfer-Komplexe nach Anspruch 1, dadurch gekennzeichnet, dass sich die beiden heterocyclischen Reste des Cyaninfarbstoffs von Benzimidazolen, insbesondere von am Benzolring halogenierten Benzimidazolen ableiten.

3. Charge-Transfer-Komplexe nach Anspruch 2, dadurch gekennzeichnet, dass ein Stickstoffatom jedes der beiden Benzimidazolreste mit Alkyl mit 1 bis 5 Kohlenstoffatomen, und das andere Stickstoffatom mit Alkyl- oder Alkoxyalkyl mit je 1 bzw. 2 bis 30 Kohlenstoffatomen oder einer der Gruppen $-(CH_2)_nX^{\ominus}$ und $-(CH_2)_n-O-CO-R$ substituiert ist, worin $X^{\ominus}$ $-SO_3^{\ominus}$ oder $-COO^{\ominus}$, R Alkyl mit 1 bis 5 Kohlenstoffatomen und n eine ganze Zahl von 1 bis 5 bedeuten.

4. Verfahren zur Herstellung von Charge-Transfer-Komplexen aus 5 Molekülen eines stark basischen zweikernigen Cyaninfarbstoffs und einem Molekül Chloranil oder Bromanil, dadurch gekennzeichnet, dass man den Cyaninfarbstoff mit einem Ueberschuss an Chlor- oder Bromanil in einem Chloroform-Methanol Lösungsmittelgemisch bei Rückflusstemperatur umsetzt und anschliessend den in feiner Suspension vorliegenden unlöslichen Charge-Transfer-Komplex durch Eintragen in ein Chloroform-Wasser Gemisch aus dem Reaktionsgemisch abtrennt, mit Chloroform nachwäscht und gegebenenfalls aus Dimethylsulfoxyd oder Trifluoräthanol umkristallisiert.

5. Verwendung eines Charge-Transfer-Komplexes gemäss einem der Ansprüche 1 bis 3 für die Herstellung eines direktpositiven photographischen Materials, dadurch gekennzeichnet, dass man den

Charge-Transfer-Komplex an den Silberhalogenid-Kristallen einer photographischen Emulsion adsorbiert.

6. Direktpositives photographisches Material welches in mindestens einer Schicht ein Silberhalogenid enthält, an welchem ein Charge-Transfer-Komplex nach einem der Ansprüche 1 bis 3 adsorbiert ist.

7. Direktpositives photographisches Material nach Anspruch 6, dadurch gekennzeichnet, dass der Cyaninteil des Charge-Transfer-Komplex positiv geladen ist.

8. Direktpositives photographisches Material nach Anspruch 7, dadurch gekennzeichnet, dass es in mindestens einer Schicht ein Silberhalogenid enthält, an welchem der Charge-Transfer-Komplex der Formel

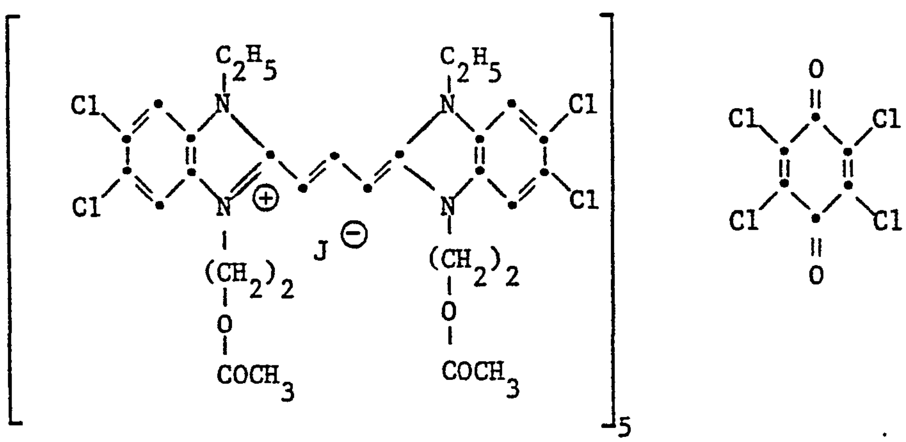

adsorbiert ist.

9. Die unter Verwendung des direktpositiven photographischen Materials nach einem der Ansprüche 6 bis 8 hergestellten Bilder.